(19)

Europäisches Patentamt

European Patent Office

Office européen des brevets

(11) **EP 4 451 405 A1**

(12) **EUROPEAN PATENT APPLICATION**
published in accordance with Art. 153(4) EPC

(43) Date of publication:
**23.10.2024 Bulletin 2024/43**

(21) Application number: **22942128.4**

(22) Date of filing: **20.05.2022**

(51) International Patent Classification (IPC):
***H01M 10/054*** (2010.01)

(52) Cooperative Patent Classification (CPC):
**H01M 10/054; Y02E 60/10**

(86) International application number:
**PCT/CN2022/094097**

(87) International publication number:
**WO 2023/221088 (23.11.2023 Gazette 2023/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology (Hong Kong) Limited**
**Central, Central And Western District (HK)**

(72) Inventors:
• **LI, Quanguo**
  **Ningde, Fujian 352100 (CN)**

• **LIU, Qian**
  **Ningde, Fujian 352100 (CN)**
• **YE, Yonghuang**
  **Ningde, Fujian 352100 (CN)**
• **YU, Chunpeng**
  **Ningde, Fujian 352100 (CN)**
• **SUN, Jingxuan**
  **Ningde, Fujian 352100 (CN)**
• **CHEN, Jiahua**
  **Ningde, Fujian 352100 (CN)**
• **XIAO, Dejun**
  **Ningde, Fujian 352100 (CN)**

(74) Representative: **Gong, Jinping**
**CocreateIP**
**Neumarkterstr. 21**
**81673 München (DE)**

(54) **SODIUM-ION BATTERY, BATTERY MODULE, BATTERY PACK AND ELECTRIC DEVICE**

(57)    The present application provides a sodium-ion battery, a battery module, a battery pack, and an electrical device. The sodium-ion battery includes a positive electrode plate, a negative electrode plate, and a separator; the positive electrode plate includes a positive electrode current collector and a positive electrode active material layer arranged on at least one surface of the positive electrode current collector, the negative electrode plate includes a negative electrode current collector and a negative electrode active material layer arranged on at least one surface of the negative electrode current collector, and the separator is arranged between the positive electrode plate and the negative electrode plate; the positive electrode active material layer has a porosity denoted as $\alpha$, the negative electrode active material layer has a porosity denoted as $\beta$, and the separator has a porosity denoted as $\gamma$, which satisfy $0 \leq (\beta-\alpha)/\gamma < 1.5$, and $\alpha \leq \gamma$. In the sodium-ion battery of the present application, the porosity of positive electrode active material layer, the porosity of the negative electrode active material layer denoted as $\beta$, and the porosity of the separator denoted as $\gamma$ can be adjusted and controlled at the same time, which can improve the charging and discharging performance of the sodium-ion battery and thus improve the capacity performance and charging and discharging power of the sodium-ion battery.

**Figure 1**

## Description

## TECHNICAL FIELD

The present application relates to the field of battery, in particular to a sodium-ion battery, a battery module, a battery pack, and an electrical device.

## BACKGROUNDS

Lithium-ion battery, due to the high energy density and long cycle life thereof, has occupied the major market for secondary battery. Currently, most advanced energy storage systems use lithium-ion battery. Nevertheless, with the price fluctuation of the lithium-ion battery, especially with the consumption of lithium resources and the shortage thereof faced in the future, there is an urgent need to find an alternative product or technology in the battery field to meet the growing global demand for energy storage.

Elements sodium and lithium are in identical main group of the periodic table of elements, and the physical and chemical properties thereof are close to each other. In addition, element sodium is abundant in nature, especially has huge reserves in the ocean; accordingly, it can be considered as the active ion of the battery, in order to solve the problem of the shortage of lithium resources.

Nevertheless, as the sodium ion has high radius and high relative atomic mass, when it applied to battery as the active ion, the second battery has poor performance such as poor charging and discharging power. Therefore, it is urgent to improve the performance of sodium-ion battery in order to obtain the sodium-ion battery having good performances.

## SUMMARY

The present application is made in view of the above problems, with the aim of providing a sodium-ion battery, a battery module, a battery pack, and a device.

In a first aspect, the present application provides a sodium-ion battery, which includes a positive electrode plate, a negative electrode plate, and a separator; the positive electrode plate includes a positive electrode current collector and a positive electrode active material layer arranged on at least one surface of the positive electrode current collector, the negative electrode plate includes a negative electrode current collector and a negative electrode active material layer arranged on at least one surface of the negative electrode current collector, and the separator is arranged between the positive electrode plate and the negative electrode plate; the positive electrode active material layer has a porosity denoted as $\alpha$, the negative electrode active material layer has a porosity denoted as $\beta$, and the separator has a porosity denoted as $\gamma$, which satisfy $0 \leq (\beta-\alpha)/\gamma \leq 1.5$, and $\alpha \leq \gamma$.

Accordingly, in the present application, the porosity of positive electrode active material layer, the porosity of the negative electrode active material layer denoted as $\beta$, and the porosity of the separator denoted as $\gamma$ can be adjusted and controlled at the same time to make them satisfy $0 \leq (\beta-\alpha)/\gamma \leq 1.5$, and $\alpha \leq \gamma$. During charging, the sodium ions in the positive electrode active material layer deintercalate out of the positive electrode plate, then quickly migrate through the separator and intercalate into the negative electrode active material layer; the sodium ions are fully and quickly received by the negative electrode active material layer, thereby improving the capacity of the sodium-ion battery. During discharging, the sodium ions in the negative electrode active material layer deintercalate out of the negative electrode plate, then quickly migrate through the separator and intercalate into the positive electrode active material layer; the sodium ions are fully and quickly received by the positive electrode active material layer, thereby improving the capacity exertion of the sodium-ion battery and improving the charging and discharging performance of the sodium-ion battery; as a result, the capacity performance and the charging and discharging power of the sodium-ion battery can be improved.

In some embodiments of the present application, $0.4 \leq (\beta-\alpha)/\gamma \leq 1.0$. Under the condition that the porosity of positive electrode active material layer, the porosity of the negative electrode active material layer denoted as $\beta$, and the porosity of the separator denoted as $\gamma$ satisfy the above range, the charging and discharging capacity of the sodium-ion battery can be improved.

In some embodiments of the present application, the positive electrode active material layer has the porosity denoted as $\alpha$, which satisfies $20\% \leq \alpha \leq 40\%$, and optionally, $28\% \leq \alpha \leq 38\%$.

Under the condition that the porosity of the positive active material layer of the present application denoted as $\alpha$ satisfies the above ranges, the positive active material layer has appropriate porosity, this, it is likely for the sodium ions to deintercalate out of the positive electrode active material layer and intercalate into the positive electrode active material layer; moreover, the electrolytic solution can fully infiltrate the positive electrode active material layer and thus the infiltrating performance at the interface of the positive electrode active material layer is improved.

In some embodiments of the present application, the negative electrode active material layer has the porosity denoted as β, which satisfies 40% ≤ β≤ 66%, and optionally, 45%≤β< 58%.

Under the condition that the porosity of the negative electrode active material layer of the present application satisfies the above ranges, the negative electrode active material layer has appropriate porosity β, thus, it is likely for the sodium ions to deintercalate out of the negative electrode active material layer and intercalate into the negative electrode active material layer; moreover, the electrolytic solution can fully infiltrate the negative electrode active material layer and thus the infiltrating performance at the interface of the positive electrode active material layer is improve.

In some embodiments of the present application, the separator has the porosity denoted as γ, which satisfies 30% ≤ y< 55%, and optionally, 33% ≤γ≤ 50%.

Under the condition that the porosity of separator of the present application satisfies the above ranges, the separator has appropriate porosity γ, thus, it is likely for the sodium ions to migrate via the separator into the positive electrode active material layer or into the negative electrode active material layer.

In some embodiments of the present application, the positive electrode active material layer has a compaction density denoted as PD 1 and the negative electrode active material layer has a compaction density denoted as PD2, which satisfy 0.44 ≤ PD1/PD2 ≤ 2.3.

In the present application, the compaction density of the positive electrode active material layer PD1 and the compaction density of the negative electrode active material layer PD2 are adjusted and controlled to satisfy 0.44 ≤ PD1/PD2 ≤ 2.3. During charging, the sodium ions that deintercalate out of the positive electrode active material layer can completely intercalate into the positive electrode active material layer; and during discharging, the sodium ions that deintercalate out of the negative electrode active material layer can completely intercalate into the positive electrode active material layer. Since the dynamic property of the positive electrode plate and the dynamic property of the negative electrode plate are matched, the speed of the deintercalation of the ions and the speed of the intercalation of the ions are basically equal; accordingly, the barrel principle, owing to the poorer dynamic property of one of the positive electrode plate and the negative electrode plate, is reduced. As a result, the performance loss and energy density loss caused by concentration polarization can be reduced, and further the charging and discharging power of sodium-ion battery can be increased.

In some embodiments of the present application, the positive electrode active material layer has the compaction density denoted as PD1, which satisfies 0.8 ≤ PD1 ≤ 1.7, optionally, 0.9 ≤ PD1 ≤ 1.6, and further optionally, 1.1 ≤ PD1 ≤ 1.5.

In the present application, the compaction density of the positive electrode active material layer PD1 is appropriate, so the thickness of the positive electrode active material layer is appropriately reduced; accordingly, the transport paths of the sodium ions are shortened and the charging and discharging power of the sodium-ion battery are improved, meanwhile, the problems such as sodium deposition and sodium dendrites caused by the concentration polarization are reduced.

In some embodiments of the present application, the negative electrode active material layer has the compaction density denoted as PD2, which satisfies 0.7 ≤ PD2 ≤ 1.8, optionally, 0.8 ≤ PD2 ≤ 1.3, and further optionally, 0.9 ≤ PD2 ≤ 1.0.

In the present application, the compaction density of the negative electrode active material layer PD2 is appropriate, so the thickness of the positive electrode active material layer is appropriately reduced; accordingly, the transport paths of the sodium ions are shortened and the charging and discharging power of the sodium-ion battery are improved, meanwhile, the sodium-ions completely intercalate into the negative electrode active material layer, thereby reducing the problems such as sodium deposition and sodium dendrites caused by the concentration polarization.

In some embodiments of the present application, the positive electrode active material layer includes the positive electrode active material, and the negative electrode active material layer includes the negative electrode active material, in which the positive electrode active material has a specific capacity denoted as CAP1 and the negative electrode active material has a specific capacity denoted as CAP2, which satisfy

$$\frac{CAP1}{CAP2} \leq \frac{h2}{h1} \times \frac{1}{PD1/PD2} \text{, and } \frac{CAP2}{CAP1} \leq \frac{h1}{h2} \times \frac{1.2}{PD2/PD1} \text{,}$$

in which h1 represents the thickness of the positive electrode active material layer when the sodium-ion battery is at 0%SOC, and h2 represents the thickness of the negative electrode active material layer when the sodium-ion battery is at 0%SOC.

In the present application, the specific capacity of the positive electrode active material CAP 1 and the specific capacity of the negative electrode active material CAP2 are adjusted and controlled to satisfy the above formulas, the specific capacity of the positive electrode active material CAP 1 can be ensured to be less than the specific capacity of the negative electrode active material CAP2; accordingly, the sodium ions deintercalated out of the positive electrode active material layer can substantially intercalate into the negative electrode active material layer, and thus the sodium ions are not likely to accumulate on the surface of the negative electrode active material; as a result, the risk of sodium deposition owing to the sodium formed by the accumulation of the sodium ions on the surface of the negative electrode plate is reduced, meanwhile, the risk of the short circuit inside the sodium battery-caused by the puncture of the separator by the sodium owning to the sodium deposition-can be reduced.

The specific capacity of the negative electrode active material CAP2 is slightly higher, but is not too much higher than the specific capacity of the positive electrode active material CAP1, for example, $2 \leq CAP2/CAP1 \leq 3$, so the risk that the redundant energy density decreases owning to the too high specific capacity of the negative electrode active material CAP2 can be reduced, thereby increasing the energy density of the sodium-ion battery.

In some embodiments of the present application, the positive electrode active material has the specific capacity denoted as CAP1, which satisfies $110mAh/g \leq CAP1 \leq 160mAh/g$, and further optionally, $120mAh/g \leq CAP1 \leq 155mAh/g$. Under the condition that the specific capacity of the positive electrode active material satisfies the above ranges, the capacity performance of the sodium-ion battery can be improved.

In some embodiments of the present application, the negative electrode active material has the specific capacity denoted as CAP2, which satisfies $300mAh/g \leq CAP2 \leq 360mAh/g$, and further optionally, $320mAh/g \leq CAP2 \leq 355mAh/g$.

Under the condition that the specific capacity of the negative electrode active material satisfies the above ranges, the capacity performance of the sodium-ion battery can be improved; moreover, the sodium ions deintercalated out of the positive electrode active material layer can ensured to substantially intercalate into the negative electrode active material layer, thereby increasing the cycle performance of the sodium-ion battery.

In some embodiments of the present application, the negative electrode active material layer includes the negative electrode active material including one or more of artificial graphite, natural graphite, soft carbon, hard carbon, silicon-based material, tin-based material, and sodium alloy; optionally, the negative electrode active material includes hard carbon.

In the present application, under the condition that the above the negative electrode active material is used, they are conductive to the migration of the sodium ions; especially, under the condition that the hard carbon is used as the negative electrode active material, the layer spacing of hard carbon is high, so the speed of the dintercalation and intercalation of the sodium ions is fast, thereby improving the charging and discharging power of sodium ion batteries.

In some embodiments of the present application, the negative electrode active material layer includes the negative electrode active material having a particle size distribution that satisfies $0.5 \leq (DV90-DV10)/DV50 < 2$.

In the present application, the difference between the particle size distribution of the negative electrode active material and the average particle size thereof is not too large. During the process that the sodium ions deintercalate out of the positive electrode active material and intercalate into the negative electrode active material, since the sodium ions have similar migration path in the negative electrode active material, they can intercalate into the negative electrode active material uniformly, thereby reducing the risk of concentration polarization.

In some embodiments of the present application, $1 \mu m \leq DV50 \leq 20 \mu m$, and further optionally, $5 \mu m \leq DV50 \leq 15 \mu m$.

In some embodiments of the present application, the positive electrode active material layer includes a positive electrode active material having a molecular formula of $Na_2MFe(CN)_6$, in which M includes one or more of Mg, K, Ca, V, Cr, Mn, Co, Ni, Cu, and Zn, and the molar ratio of M to Fe satisfies from 0.95 to 1.05.

In some embodiments of the present application, the separator has a thickness of from $5 \mu m$ to $15 \mu m$, and optionally from $7 \mu m$ to $13 \mu m$.

In the present application, under the condition that the thickness of the separator satisfies the above ranges, the thickness of the separator is appropriate, so the transport paths of the sodium ions are short, and thus the charging and discharging power of sodium-ion batteries can be improved; moreover, the separator have a certain thickness to maintain the mechanical strength, so that the problems caused by the too thin separator, such as the short circuit inside the sodium-ion battery and the self-discharge of sodium-ion battery, can be reduced.

In the present application, the positive electrode active material has high structural stability and thus is conducive to the deintercalation and intercalation of the sodium ions.

In a second aspect, the present application provides a battery module, including the sodium-ion battery according to the first aspect of the present application.

In a third aspect, the present application provides a battery pack, including the battery module according to the second aspect of the present application.

In a fourth aspect, the present application provides an electrical device, including the sodium-ion battery according to the first aspect of the present application, the battery module according to the second aspect of the present application, or the battery pack according to the third aspect of the present application.

## Brief Description of the Drawings

In order to provide a clearer explanation of the technical solution of the embodiments of the present application, a brief introduction will be given to the accompanying drawings required in the embodiments of the present application. It is evident that the accompanying drawings described below are only some embodiments of the present application.

For ordinary technical personnel in the art, other accompanying drawings can be obtained based on the drawings without any creative effort.

Figure 1 is a schematic diagram of the sodium-ion battery according to one embodiment of the present application.

Figure 2 is an exploded schematic diagram of the sodium-ion battery according to one embodiment of the present application as shown in Figure 1.

Figure 3 is a schematic diagram of the battery module according to one embodiment of the present application.

Figure 4 is a schematic diagram of the battery pack according to one embodiment of the present application.

Figure 5 is an exploded schematic diagram of the battery pack according to one embodiment of the present application as shown in Figure 4.

Figure 6 is a schematic diagram of the electrical device according to one embodiment of the present application.

The references in the accompanied drawings are described as follows:

1. Sodium-ion battery; 11. Outer packing; 111. Top cover assembly; 112. Housing; 12. Electrode assembly; 10. Battery module; 20. Battery pack; 21. Upper box; 22. Lower box; and 30. Electrical device.

## Detailed Description

Hereinbelow, the implementation of the sodium-ion battery, the battery module, the battery pack, and the electrical device as disclosed in the present application will be explained in detail. However, there may be situations where unnecessary detailed explanations may be omitted. For example, there are situations where detailed explanations of well-known matters are omitted and repeated explanations of the same structure are actually provided. This is to avoid the following explanations becoming unnecessarily lengthy and easy for those skilled in the art to understand. In addition, the accompanying drawings and the following explanations are provided for those skilled in the art to fully understand the present application and are not intended to limit the subject matter recorded in the claims.

The "scope" disclosed in the present application is limited in the form of a lower limit and an upper limit. The given scope is limited by selecting a lower limit and an upper limit, and the selected lower limit and upper limit the boundary of the special scope. The range limited in this way can include or exclude end values, and can be arbitrarily combined, that is, any lower limit can be combined with any upper limit to form a range. For example, if a range of 60-120 and 80-110 is listed for specific parameters, it is also expected to be understood as a range of 60-110 and 80-120. In addition, if the minimum range values 1 and 2 are listed, and if the maximum range values 3, 4, and 5 are listed, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only a shortened representation of these numerical combinations. In addition, when expressing an integer with a parameter of $\geq 2$, it is equivalent to disclosing that the parameter is, for example, integers 2, 3, 4, 5, 6, 7, 8, 9, 10, 11, 12, etc.

Unless otherwise specified, all implementations and optional implementations of the present application can be combined to form new technical solutions. Unless otherwise specified, all technical features and optional technical features of the present application can be combined to form a new technical solution.

Unless otherwise specified, all steps of the present application can be carried out in sequence or randomly, preferably in sequence. For example, the method includes steps (a) and (b), indicating that the method can include steps (a) and (b) that are sequentially performed, as well as steps (b) and (a) that are sequentially performed. For example, mentioning a method can also include step (c), indicating that step (c) can be added to the method in any order. For example, the method can include steps (a), (b), and (c), as well as steps (a), (c), and (b), and can also include steps (c), (a), and (b).

Unless otherwise specified, the terms "comprise/comprising", "include/including", or "contain/containing" mentioned in the present application indicate the open-ended mode, but also can be interpret as the closed-ended mode. For example, "comprise/comprising", "include/including", or "contain/containing" may indicate that other components that are not listed may be comprised, included, or contained, or only listed components may be comprised, included, or contained.

Unless otherwise specified, in the present application, the wording "or" is inclusive. For example, the phrase "A or B" means "A, B, or both A and B". More specifically, any of the following conditions satisfy the condition "A or B":

A is true (or exists) and B is false (or does not exist); A is false (or non-existent) and B is true (or exists); or both A and B are true (or present).

The sodium ions in the sodium-ion battery are the active ions. During the charging, the sodium ions deintercalate out of the positive electrode active material, pass through the separator, and intercalate into the negative electrode active material, meanwhile, the electrons flow to the negative electrode plate from the positive electrode plate via the external circuit. During the discharging, the sodium ions and the electrons move in the direction opposite to the direction during the charging. Since the sodium ions have large ionic radius, during charging and discharging, they have high requirement for the ion transport path; otherwise, the transport efficiency of the sodium ions may be low, which result in reduced charging and discharging power of sodium-ion battery.

In order to improve the charging and discharging power of the sodium-ion battery, the inventors, starting from the perspective of improving the transport efficiency of sodium ions, adjust and control the porosities of the material in the positive electrode plate and the negative electrode plate, in order to ensure the smooth migration of the sodium ions and thus the transport efficiency of the sodium ions is improved. Hereinbelow, the present application will be described in detail.

[Sodium-ion battery]

In the first aspect, a sodium-ion battery is provided in the embodiments of the present application. The sodium-ion battery includes a positive electrode plate, a negative electrode plate and a separator. The separator is arranged between the positive electrode plate and the negative electrode plate.

[Positive electrode plate]

The positive electrode plate includes a positive electrode current collector and a positive electrode active material layer arranged on at least one surface of the positive electrode current collector, and the positive electrode active material layer includes the positive active material.

For example, the positive electrode current collector has two surfaces opposite to each other in the thickness direction thereof, and the positive electrode active material layer is arranged on one of or two of the opposite surfaces of the positive electrode current collector.

In some embodiments, the positive electrode current collector may be a metal foil or a composite current collector. For example, the metal foil may be an aluminum foil. The composite current collector may include a base layer of polymer material and a metal layer formed on at least one surface of the base layer of polymer material. The composite current collector may by forming the metal material (such as aluminum, aluminum alloy, nickel, nickel alloy, titanium, titanium alloy, silver and silver alloy) on the substrate of the polymer material (such as polypropylene (PP), polyethylene terephthalate (PET), polybutylene terephthalate (PBT), polystyrene (PS), and polyethylene (PE)).

In some embodiments, the positive electrode active material may adopt the positive electrode active material as commonly understood in the art for use in batteries. For example, the positive electrode active material may include one or more of the sodium transition metal oxide, polyanionic compound, and Prussian blue compound.

As an example of the above sodium transition metal oxide, the sodium transition metal oxide may be $Na_{1-x}Cu_hFe_kMn_iM^1_mO_{2-y}$, in which $M^1$ is one or more of Li, Be, B, Mg, Al, K, Ca, Ti, Co, Ni, Zn, Ga, Sr, Y, Nb, Mo, In, Sn, and Ba, $0 < x \leq 0.33$, $0 < h \leq 0.24$, $0 \leq k \leq 0.32$, $0 < 1 \leq 0.68$, $0 \leq m < 0.1$, $h+k+l+m = 1$, and $0 \leq y < 0.2$.

As another example of the above sodium transition metal oxide, the sodium transition metal oxide may be $Na_{0.67}Mn_{0.7}Ni_zM^2_{0.3-z}O_2$, in which $M^2$ is one or more of Li, Mg, Al, Ca, Ti, Fe, Cu, Zn, and Ba, and $0 < z \leq 0.1$.

As yet another example of the above sodium transition metal oxide, the sodium transition metal oxide may be $Na_aLi_bNi_cMn_dFe_eO_2$, in which $0.67 < a \leq 1$, $0 < b < 0.2$, $0 < c < 0.3$, $0.67 < d+e < 0.8$, and $b+c+d+e = 1$.

As an example of the above polyanionic compound, the polyanionic compound may be $A^1_fM^3_g(PO_4)_iO_jX^1_{3-j}$, in which A is one or more of H, Li, Na, K, and $NH_4$, $M^3$ is one or more of Ti, Cr, Mn, Fe, Co, Ni, V, Cu, and Zn, $X^1$ is one or more of F, Cl, and Br, $0 < f \leq 4$, $0 < g \leq 2$, $1 \leq i \leq 3$, and $0 \leq j \leq 2$.

As another example of the above polyanionic compound, the polyanionic compound may be $NanM^4PO4X^2$, in which $M^4$ is one or more of Mn, Fe, Co, Ni, Cu and Zn, $X^2$ is one or more of F, Cl, and Br, $0 < n \leq 2$; $NapM^5q(SO4)3$, in which $M^5$ is one or more of Mn, Fe, Co, Ni, Cu, and Zn, $0 < p \leq 2$, and $0 < q \leq 2$.

As another example of the above polyanionic compound, the polyanionic compound may be $NasMntFe3-t(PO4)2(P2O7)$, in which $0 < s \leq 4$, $0 \leq t \leq 3$, for example, t is 0, 1, 1.5, 2, or 3.

As an example of the above Prussian blue compound, the Prussian blue compound may be $AuM^6v[M^7(CN)6]w \cdot xH2O$, in which A is one or more of $H^+$, $NH4^+$, alkali metal cations, and alkaline earth metal cations, $M^6$ and $M^7$ are each independently one or more of the transition metal cations, $0 < u \leq 2$, $0 < v \leq 1$, $0 < w \leq 1$, and $0 < x < 6$. For example, A is one or more of $H^+$, $Li^+$, $Na^+$, $K^+$, $NH4^+$, $Rb^+$, $Cs^+$, $Fr^+$, $Be^{2+}$, $Mg^{2+}$, $Ca^{2+}$, $Sr^{2+}$, $Ba^{2+}$, and $Ra^{2+}$. $M^6$ and $M^7$ are independently one or more of Ti, V, Cr, Mn, Fe, Co, Ni, Cu, Zn, Sn, and W or the cations transition metal elements. Preferably, A is one or more of $Li^+$, $Na^+$, and $K^+$, $M^6$ is one or more of Mn, Fe, Co, Ni and Cu or the cations of transition metal elements, and $M^7$ is one or more of Mn, Fe, Co, Ni, and Cu or the cations of transition metal elements.

Further, the positive electrode active material layer includes the positive electrode active material having the molecular formula of $Na_2MFe(CN)_6$, in which M includes one or more of Mg, K, Ca, V, Cr, Mn, Co, Ni, Cu, and Zn, and the molar ratio of M to Fe satisfies from 0.95 to 1.05.

The positive electrode active material in the above embodiments has relatively high structural stability and thus is conducive to the deintercalation and intercalation of the of sodium ions. For example, the molar ratio of M to Fe is 0.95, 1.0, or 1.05, or is the range formed by any two of the values as mentioned above.

In some embodiments, the positive electrode active material layer optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene- hexafluoropropylene copolymer, or fluorinated acrylate resins.

In some embodiments, the positive electrode active material layer may optionally include a conductive agent. As an example, the conductive agent may include at least one of superconducting carbon, acetylene black, carbon black, Ketjen Black, carbon dots, carbon nanotubes, graphene, or carbon nanofibers.

In some embodiments, the positive electrode plate may be prepared as follows: the above components for the preparation of the positive electrode plate, such as the positive electrode active material, the conductive agent, the binder and any other components, are dispersed in a solvent (e.g., N-methylpyrrolidone) to form a positive electrode slurry; positive electrode slurry is applied on the positive electrode current collector, after drying and cold pressing, the positive electrode plate is obtained.

[Negative electrode plate]

The negative electrode plate includes the negative electrode current collector and the negative electrode active material layer arranged on at least one surface of the negative electrode current collector; the negative electrode active material layer includes the negative electrode active material.

As an example, the negative electrode current collector has two surfaces opposite to each other in the thickness direction thereof, and the negative electrode active material layer is arranged on one of or two of the opposite surfaces of the negative electrode current collector.

In some embodiments, the negative electrode current collector may be a metal foil or a composite current collector. As an example of the metal foil, a copper foil or a copper alloy foil may be used. The composite current collector may include a base layer of a polymer material and a layer of metal material formed on at least one surface of the base layer of a polymer material. The composite current collector may be formed by applying the metal material (copper, copper alloy, nickel, nickel alloy, titanium, titanium alloy, silver, and silver alloy, etc.) on the surface of the base layer of the polymer material (such as polypropylene (PP), polyethylene terephthalate (PET), polybutylene terephthalate (PBT), polystyrene (PS), and polyethylene (PE)).

In some embodiments, the negative electrode film layer may include a negative electrode active material used in secondary battery as commonly understood in the art. For example, the negative electrode active material may include at least one of the following materials: artificial graphite, natural graphite, soft carbon, hard carbon, silicon-based material, tin-based material, or sodium alloy. The silicon-based material may be at least one selected elemental silicon, silicon oxide, silicon-carbon complex, silicon-nitrogen complex, and silicon alloys. The tin-based material may be at least one selected from elemental tin, tin oxide, and tin alloy. Nevertheless, the present application is not limited to those materials, and may use other materials traditionally used as the negative electrode active material of the battery. Those negative electrode active material s can be used alone or be used as a combination of more than two thereof.

In some embodiments, the negative electrode active material may include hard carbon. The layer spacing of the hard carbon is large, thus, the speeds of the deintercalation and intercalation of the sodium ions are fast, thereby improving the charging and discharging power of the sodium-ion battery.

In some embodiments, the particle size distribution of the negative electrode active material satisfies $0.5 \leq (D_V90-D_V10)/D_V50 \leq 2$. The difference between the particle size distribution of the negative electrode active material and the average particle size thereof is not too large. During the process that the sodium ions deintercalate out of the positive electrode active material and intercalate into the negative electrode active material, since the sodium ions have similar migration path in the negative electrode active material, they can intercalate into the negative electrode active material uniformly, thereby reducing the risk of concentration polarization. For example, when the negative electrode active material is the hard carbon, the sodium ions have similar migration path in the hard carbon, so they can intercalate into the hard carbon uniformly. Dv50 value of the negative electrode active material refers to the median particle size of the negative electrode active material. Particularly, a particular Dv50 value means that 50% by total volume of the particles have the particle size higher that value, and the other 50% by total volume of the particles have the particle size smaller than that value. Dv50 value of the negative electrode active material may be measured according to the method specified in GB/T19077-2016. Dv10 value means that 10% by volume distribution of the particles have the particle size of that value. In particular, Dv10 value means that 10% by total volume of the particles have the particle size higher that value, and the other 90% by total volume of the particles have the particle size smaller than that value. Dv10 value of the negative electrode active material may be measured according to the method specified in GB/T19077-2016. Dv90 value means that 90% by volume distribution of the particles have the particle size of that value. In particular, Dv90 value means that 90% by total volume of the particles have the particle size higher that value, and the other 10% by total volume of the particles have the particle size smaller than that value. Dv90 value of the negative electrode active material may be measured according to the method specified in GB/T19077-2016.

For example, taking hard carbon as the negative electrode active material, the particle size distribution may be controlled to satisfy the above ranges by the following process: the wheat straw as a biomass precursor is used as raw material and is heated at high temperature under air environment for the first drying; after the first drying, the wheat straw was crushed, and then the crushed wheat straw is heated under an oxygen-free environment for the second drying; after the second drying, the dried wheat straw is ground with a ball mill as the grinding machine, the grinding is conducted with ball grinding bead having three different particle sizes (such as 50mm, 20mm, and 5mm) on different part of the dried wheat straw; after griding, the hard carbon having expected particle size distribution is obtained. Other particle size distributions of the negative electrode active material may be adjusted likewise.

In some embodiments, the median particle size of the negative electrode active material satisfies $1\mu m \leq DV50 \leq 20\mu m$.

Under the condition that the average particle size of the negative electrode active material satisfies the above ranges, the deintercalation and intercalation path for the sodium ions can be shortened, so as to ensure the initial cycle coulombic efficiency of sodium-ion battery. For example, under the condition that the hard carbon is used as the negative electrode active material, the layer spacing of hard carbon is high, so the speed of the dintercalation and intercalation of the sodium ions is fast, which is conducive to improving the charging and discharging power of sodium ion batteries. In addition, under the condition that the particle size of hard carbon is controlled to satisfy the above ranges, the deintercalation and intercalation path for the sodium ions can be shortened. Optionally, $5\mu m \leq DV50 \leq 15\mu m$, for example, DV50 may be $1\mu m$, $2\mu m$, $3\mu m$, $4\mu m$, $5\mu m$, $6\mu m$, $7\mu m$, $8\mu m$, $9\mu m$, $10\mu m$, $11\mu m$, $12\mu m$, 13pm, $14\mu m$, $15\mu m$, $17\mu m$, $18\mu m$, $19\mu m$, or $20\mu m$.

In some embodiments, the negative electrode active material layer may optionally include a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) or carboxymethyl chitosan (CMCS).

In some embodiments, the negative electrode active material layer may optionally include a conductive agent. The conductive agent may be selected from at least one of superconducting carbon, acetylene black, carbon black, Ketjen Black, carbon dots, carbon nanotubes, graphene or carbon nanofibers.

In some embodiments, the negative electrode active material layer may optionally include other auxiliaries, such as thickeners (e.g., sodium carboxymethyl cellulose (CMC-Na)).

In some embodiments, the negative electrode plate may be prepared as follows: the components for preparing the negative electrode plate as mentioned above, such as the negative electrode active material, the conductive agent, the binder and any other component, are dispersed in a solvent (e.g., deionized water) to form a negative electrode slurry; the negative electrode slurry is applied on the negative electrode current collector, after drying and cold pressing, the negative electrode plate is obtained.

[Separator]

There are no special limitations on the type of separator in the present application. Any well-known porous-structure separator having good chemical and mechanical stability can be used.

In some embodiments, the separator may have a material being at least one selected from glass fiber, nonwoven fabric, polyethylene, polypropylene, or polyvinylidene fluoride. The separator may be a single layer film or a multi-layer composite film, without any special limitations. When the separator is a multi-layer composite film, the materials of each layer may be the same or different, without any special limitations.

In some embodiments, the positive electrode plate, the negative electrode plate, and the separator may be manufactured into an electrode assembly by a winding process or a lamination process.

In some embodiments, the thickness of the separator is from 5 $\mu m$ to 15$\mu m$.

Under the condition that the thickness of the separator satisfies the above ranges, the thickness of the separator is appropriate, so the transport paths of the sodium ions are short, and thus the charging and discharging power of sodium-ion batteries can be improved; moreover, the separator have a certain thickness to maintain the mechanical strength, so that the problems caused by the too thin separator, such as the short circuit inside the sodium-ion battery and the self-discharge of sodium-ion battery, can be reduced. The thickness of the separator may be selected from 7$\mu m$

to 13μm. For example, the thickness of the separator may be 5μm, 6μm, 7μm, 8μm, 9μm, 10μm, 11μm, 12μm, 13μm, 14μm, or 15μm; the thickness of the separator may be a range formed by any two of the values as mentioned above.

In some embodiments, the porosity $\alpha$ of the positive electrode active material layer, the porosity $\beta$ of the negative electrode active material layer, and the porosity $\gamma$ of the separator satisfies $0 \leq (\beta-\alpha) / \gamma \leq 1.5$, and $\alpha \leq \gamma$.

The porosity $\alpha$ of the positive electrode active material layer means the ratio of the pore volume in the positive electrode active material layer to the total volume of the positive electrode active material. The porosity $\beta$ of the negative active material layer means the ratio of the pore volume in the negative electrode active material layer to the total volume of the negative electrode active material. The porosity $\gamma$ of the separator means the ratio of the pore volume in the separator to the total volume of the separator.

The measurement of the above porosity can be conducted according to the porosity test method prescribed in GBAT 24586-2009. For example, the text may be conducted on AccuPyc II 1340 automatic true density tester from Micromeritics, USA. The test method includes the steps of cutting the sample (such as the positive electrode plate) to obtain 30 small discs with a diameter of 14mm; measuring the true volume of the 30 small discs with a diameter of 14mm using inert gases such as helium or nitrogen as the medium according to the principle of gas adsorption; and calculating the apparent volume and the true volume of the positive electrode plate according to the area, thickness and number of the small discs, and then calculating the porosity according to the apparent volume and the true volume of the positive electrode plate. Accordingly, the tests of the porosity of the negative electrode plate and the porosity of the separator may be conducted likewise and thus are not be repeated here.

Under the condition of $(\beta-\alpha) / \gamma < 0$, the porosity of the separator is relatively high and there are many pores in the separator, the siphon effect of the electrolyte when passing through the separator will be weakened, as a result, the electrolytic solution cannot flow back timely and thus the sodium ions cannot be fully dissociated via the electrolytic solution to the opposite plate. In addition, due to the high porosity of the separator, the insulation effect of the separator is poor, thus, it is difficult to effectively insulate the positive electrode plate and the negative electrode plate and the self-discharge of the sodium ion battery is too large.

Under the condition of $(\beta-\alpha) / \gamma > 1.5$, the porosity of the separator is relatively small, and thus the migration rate of sodium ions is restricted by the separator, for example, the process that the sodium ions intercalate into the negative electrode plate after deintercalating out of the positive electrode plate is restricted by the porosity of the separator. It is difficult for the separator to provide sufficient pores for the migration of the sodium ions, resulting in limited charging and discharging power of the sodium ion batteries.

In the embodiments of the present application, the porosity of the positive active material layer denoted as $\alpha$, the porosity of the negative active material layer denoted as $\beta$, and the porosity of the separator denoted as $\gamma$ are adjusted to satisfy $0 \leq (\beta-\alpha) / \gamma \leq 1.5$ and $\alpha \leq \gamma$. During charging, the sodium ions in the positive active material layer deintercalate out of the positive electrode plate and can quickly pass through the separator and intercalate into the negative active material layer; the sodium ions are fully and quickly received by the negative active material layer, thereby improving the capacity exertion of the sodium ion battery. During discharging, the sodium ions in the negative active material layer are removed from deintercalate out of the negative electrode plate and can quickly pass through the separator and intercalate into the positive active material layer; the sodium ions are fully and quickly received by the positive active material layer, thereby improving the capacity exertion of the sodium ion battery and further improving the charging and discharging performance of the sodium ion battery, as a result, the capacity performance and the charging and discharging performance of the sodium-ion battery are improved. Optionally, $0.4 \leq (\beta-\alpha) / \gamma \leq 1.0$, and, for example, $(\beta-\alpha) / \gamma$ may be 0, 0.1, 0.2, 0.25, 0.3, 0.4, 0.5, 0.6, 0.7, 0.8, 0.9, 0.95, 1.0, 1.1, 1.2, 1.3, 1.4 or 1.5; and $(\beta-\alpha) / \gamma$ may be in the range formed by any two of the values as mentioned above.

In some embodiments, the porosity of the positive active material layer denoted as $\alpha$ satisfies $20\% \leq \alpha \leq 40\%$. Under the condition that the porosity of the positive active material layer denoted as $\alpha$ satisfies the above range, the porosity of the positive active material layer is moderate, thus, it is likely for the sodium ions to deintercalate the out of the positive active material layer and intercalate into the positive active material layer; moreover, the electrolytic solution can fully infiltrate the positive electrode active material layer and thus the infiltrating performance at the interface of the positive electrode active material layer is improved. Optionally, $28\% \leq a \leq 38\%$. For example, $\alpha$ may be 20%, 25%, 28%, 30%, 32%, 35%, 38%, 39%, or 40%, and $\alpha$ may be in the range formed by any two of the values as mentioned above.

In some embodiments, the porosity of the negative active material layer denoted as $\beta$ satisfies $40\% \leq \beta \leq 66\%$. Under the condition that the porosity of the negative electrode active material layer of the present application satisfies the above ranges, the negative electrode active material layer has appropriate porosity $\beta$, thus, it is likely for the sodium ions to deintercalate out of the negative electrode active material layer and intercalate into the negative electrode active material layer; moreover, the electrolytic solution can fully infiltrate the negative electrode active material layer and thus the infiltrating performance at the interface of the positive electrode active material layer is improve. Optionally, $45\% \leq \beta \leq 58\%$; For example, $\beta$ may be 40%, 43%, 45%, 50%, 55%, 58%, 60%, 62%, or 66%, and $\beta$ may be in the range formed by any two of the values as mentioned above.

In some embodiments, the porosity of the separator denoted as $\gamma$ satisfies $30\% \leq \gamma \leq 55\%$. Under the condition that the porosity of separator of the present application satisfies the above ranges, the separator has appropriate porosity $\gamma$, thus, it is likely for the sodium ions to migrate via the separator into the positive electrode active material layer or into the negative electrode active material layer. Optionally, $33\% \leq \gamma \leq 50\%$. For example, $\gamma$ may be 30%, 32%, 33%, 35%, 40%, 45%, 50%, 52%, or 55%, and $\gamma$ may be in the range formed by any two of the values as mentioned above.

In the above embodiments, the positive active material layer, the negative active material layer, and the separator have the porosity that matches with each other, which is conductive to rendering the sodium ions deintercalate out of one plate and fully intercalate into the other plate, thus the charging and discharging power of the sodium-ion battery is improved.

In some embodiments, the compaction density of the positive active material layer denoted as PD1 and that of the negative active material layer denoted as PD2 satisfy $0.44 \leq PD1/PD2 \leq 2.3$.

The compaction density is the ratio of the weight of the active material layer to the volume of the active material layer. The arrangement of the active material layer can be adjusted by adjusting the compaction density of the active material layer. The volume of the active material layer is the product of the thickness of the active material layer and the thickness of the active material layer.

In the present application, the compaction density of the positive electrode active material layer PD1 and the compaction density of the negative electrode active material layer PD2 are adjusted and controlled to satisfy $0.44 \leq PD1/PD2 \leq 2.3$. During charging, the sodium ions that deintercalate out of the positive electrode active material layer can completely intercalate into the positive electrode active material layer; and during discharging, the sodium ions that deintercalate out of the negative electrode active material layer can completely intercalate into the positive electrode active material layer. Since the dynamic property of the positive electrode plate and the dynamic property of the negative electrode plate are matched, the speed of the deintercalation of the ions and the speed of the intercalation of the ions are basically equal; accordingly, the barrel principle, owing to the poorer dynamic property of one of the positive electrode plate and the negative electrode plate, is reduced. As a result, the performance loss and energy density loss caused by concentration polarization can be reduced, and further the charging and discharging power of sodium-ion battery can be increased. Optionally, $1.1 \leq PD1/PD2 \leq 1.9$. For example, PD1/PD2 may be 0.44, 0.50, 0.55, 0.60, 0.65, 0.70, 0.75, 0.80, 0.85, 0.90, 1.0, 1.2, 1.5, 1.8, 2.0, 2.1, 2.2, or 2.3; or PD1/PD2 may be in the range formed by any two of the values as mentioned above.

Optionally, the compaction density of the positive active material layer denoted as PD1 satisfies $0.8 \leq PD1 \leq 1.7$.

The compaction density of the positive electrode active material layer PD1 is appropriate, so the thickness of the positive electrode active material layer is appropriately reduced; accordingly, the transport paths of the sodium ions are shortened and the charging and discharging power of the sodium-ion battery are improved, meanwhile, the problems such as sodium deposition and sodium dendrites caused by the concentration polarization are reduced. In addition, under the condition that the positive active material layer has the compaction density that satisfies the above ranges, the capacity performance of the sodium-ion battery can be improved, the internal resistance can be reduced, and thus the cycle life of the sodium-ion battery can be extended. Optionally, $0.9 \leq PD1 \leq 1.6$, and further optionally, $1.1 \leq PD1 \leq 1.5$. For example, PD1 may be 0.8, 0.85, 0.9, 1.0, 1.1, 1.2, 1.3, 1.4, 1.5, 1.6, 1.65, or 1.7; or PD1 may be in the range formed by any two of the values as mentioned above.

The compaction density of the negative active material layer denoted as PD2 satisfies $0.7 \leq PD2 \leq 1.8$.

The compaction density of the negative electrode active material layer PD2 is appropriate, so the thickness of the positive electrode active material layer is appropriately reduced; accordingly, the transport paths of the sodium ions are shortened and the charging and discharging power of the sodium-ion battery are improved, meanwhile, the sodium-ions completely intercalate into the negative electrode active material layer, thereby reducing the problems such as sodium deposition and sodium dendrites caused by the concentration polarization. Optionally, $0.8 \leq PD2 \leq 1.3$, and further optionally, $0.9 \leq PD2 \leq 1.0$. For example, PD2 may be 0.7, 0.75, 0.8, 0.85, 0.9, 1.0, 1.1, 1.2, 1.3, 1.4, 1.5, 1.6, 1.7, or 1.8; and PD2 may be in the range formed by any two of the values as mentioned above.

In some embodiments of the present application, the positive electrode active material layer includes the positive electrode active material, and the negative electrode active material layer includes the negative electrode active material, in which the positive electrode active material has a specific capacity denoted as CAP 1 and the negative electrode active material has a specific capacity denoted as CAP2, which satisfy

$$\frac{CAP1}{CAP2} \leq \frac{h2}{h1} \times \frac{1}{PD1/PD2} \text{, and } \frac{CAP2}{CAP1} \leq \frac{h1}{h2} \times \frac{1.2}{PD2/PD1} \text{,}$$

in which h1 represents the thickness of the positive electrode active material layer when the sodium-ion battery is at 0% State Of Charge (SOC) and h2 represents the thickness of the negative electrode active material layer when the sodium-ion battery is at 0%SOC. 0%SOC represents that the sodium-ion battery is fully discharged. Under different SOC states, the thickness of the positive active material layer or the negative active material layer may change, especially the thickness of the negative active material layer will increase with the increase of SOC.

The specific capacity refers to the ratio of the capacitance that can be released by the active material in the sodium-ion battery to the mass of the active material. The specific capacity can be expressed in milliampere-hours per gram (mA h/g).

In the embodiments of the present application, the specific capacity of the positive electrode active material CAP1 and the specific capacity of the negative electrode active material CAP2 are adjusted and controlled to satisfy the above formulas, the specific capacity of the positive electrode active material CAP1 can be ensured to be less than the specific capacity of the negative electrode active material CAP2; accordingly, the sodium ions deintercalated out of the positive electrode active material layer can substantially intercalate into the negative electrode active material layer, and thus the sodium ions are not likely to accumulate on the surface of the negative electrode active material; as a result, the risk of sodium deposition owning to the sodium formed by the accumulation of the sodium ions on the surface of the negative electrode plate is reduced, meanwhile, the risk of the short circuit inside the sodium battery-caused by the puncture of the separator by the sodium owning to the sodium deposition—can be reduced.

The specific capacity of the negative electrode active material CAP2 is slightly higher, but is not too much higher than the specific capacity of the positive electrode active material CAP1, for example, $2 \leq CAP2/CAP1 \leq 3$, so the risk that the redundant energy density decreases owning to the too high specific capacity of the negative electrode active material CAP2 can be reduced, thereby increasing the energy density of the sodium-ion battery.

In some embodiments, the specific capacity CAP1 of the positive active material satisfies $110mAh/g < CAP1 \leq 160mAh/g$.

Under the condition that the specific capacity of the positive electrode active material satisfies the above ranges, the capacity performance of the sodium-ion battery can be improved. Optionally, $120mAh/g \leq CAP1 \leq 155mAh/g$, by example, CAP1 may be 110mAh/g, 115mAh/g, 120mAh/g, 125mAh/g, 130mAh/g, 135mAh/g, 140mAh/g, 150mAh/g, 155mAh/g or 160mAh/g; and CPA1 may be in the range formed by any two of the values as mentioned above.

In some embodiments, the specific capacity CAP2 of the negative active material satisfies $300mAh/g \leq CAP2 \leq 360mAh/g$.

Under the condition that the specific capacity of the negative electrode active material satisfies the above ranges, the capacity performance of the sodium-ion battery can be improved; moreover, the sodium ions deintercalated out of the positive electrode active material layer can ensured to substantially intercalate into the negative electrode active material layer, thereby increasing the cycle performance of the sodium-ion battery. Optionally, $320mAh/g \leq CAP2 \leq 355mAh/g$. For example, CAP2 may be 300mAh/g, 310mAh/g, 320mAh/g, 325mAh/g, 330mAh/g, 335mAh/g, 340mAh/g, 345mAh/g, 350mAh/g or 355mAh/g; and CPA2 may be in the range formed by any two of the values as mentioned above.

[Electrolyte]

The electrolyte conduct the ions between the positive and negative electrode plates. The types of electrolytes in the present application are not specifically restricted, and can be selected according to requirements. For example, the electrolyte may be liquid, gel, or full solid.

In some embodiments, the electrolytes is an electrolytic solution. The electrolytic solution includes an electrolyte salt and a solvent.

In some embodiments, the electrolyte salt may be at least one selected from $NaPF_6$, $NaClO_4$, $NaBCl_4$, $NaSO_3CF_3$ and $Na(CH_3)C_6H_4SO_3$.

In some embodiments, the solvent may be selected at least one selected from ethyl carbonate, propylidene carbonate, methyl ethyl carbonate, diethyl carbonate, dimethyl carbonate, dipropyl carbonate, methyl propyl carbonate, ethylene propyl carbonate, butylene carbonate, ethyl fluorocarbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, methyl ethyl sulfone, and diethyl sulfone.

In some embodiments, the electrolytic solution may optionally include an additive. For example, the additive may include a negative film forming additive, a positive film forming additive, and may include an additive that can improve certain properties of the battery, such as the additive that can improve the overcharge performance of the battery and the additive that can improve the high or low temperature performance of the battery.

[Outer packing]

In some embodiments, the sodium-ion battery may include an outer packaging. The outer packaging may be used to encapsulate the electrode assembly and the electrolyte.

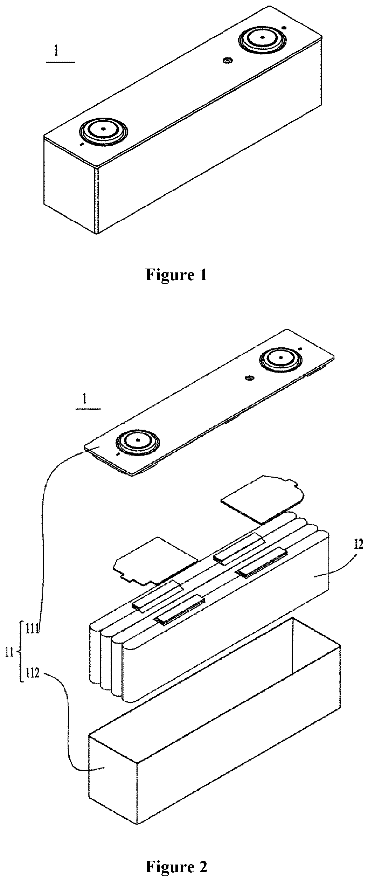

In some embodiments, the outer packaging of the sodium-ion battery may be a hard housing, such as a hard plastic housing, an aluminum housing, and a steel housing. The outer packaging of the secondary battery may be a soft pouch, such as a soft pouch in bag form. Soft pouch may have the material of plastic, such as one or more selected from polypropylene, polybutylene terephthalate, or polybutylene succinate. The shape of the sodium-ion battery is not specifically restricted in the present application, and can be cylindrical, square, or any other shape. For example, Figure 1 and Figure 2 is an example of a square structured sodium-ion battery 1.

In some embodiments, the sodium-ion battery 1 includes an outer packaging 11. The outer package 11 includes a top cover assembly 111 and a housing 112. The positive electrode plate, the negative electrode plate and the separator constitute an electrode assembly 12, which is accommodated in the housing 112 which includes the electrolyte. The positive electrode plate or the negative electrode plate includes a tab. During the charging and discharging of the sodium-ion battery 1, the metal ions repeated intercalate into and deintercalate out of the positive electrode plate and the negative electrode plate. The electrolyte conduct the ions between the positive electrode plate and the negative electrode plate. The separator is arranged between the positive electrode plate and the negative electrode plate and mainly prevents the short circuit of the positive electrode and negative electrodes and enables the active ions to pass through. Specifically, the sodium-ion battery 1 may be med by winding or laminating, and is not limited thereto.

Optionally, the housing 112 may include a bottom plate and a side plate connected to the bottom plate, and the bottom plate and side plate enclose to form an accommodation chamber. The housing 112 has an opening connected to the accommodation chamber, and the top cover assembly 111 can cover the opening to close the accommodation chamber. The positive electrode plate, negative electrode plate, and separator may form an electrode assembly 12 through winding or stacking processes. The electrode assembly 12 is encapsulated in the accommodation chamber. The electrolytic solution immerses the electrode assembly 52. The number of electrode components 12 contained in the sodium-ion battery 1 may be one or more, and may be adjusted by those skilled in the art according to requirements.

The sodium-ion battery 1 may be assembled to form a battery module, and the battery module may be a battery module or a battery pack. For example, the battery module may include one or more sodium-ion battery 1, the particular number can be adjusted by those skilled in the art according to the application and capacity of the battery module.

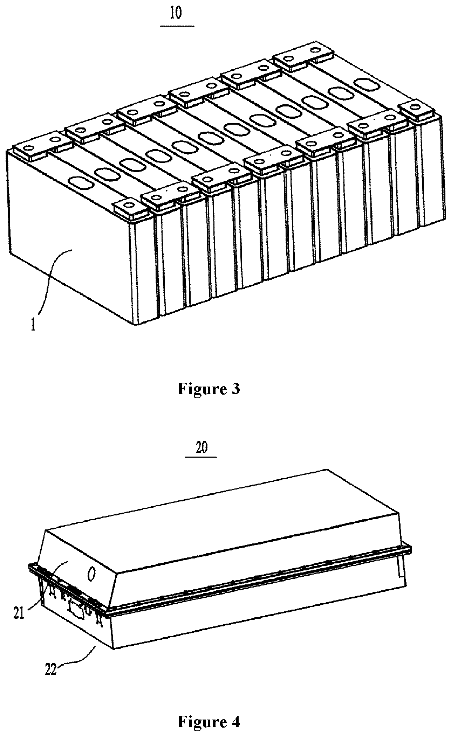

Figure 3 is a schematic diagram of battery module 10 as an example. Referring to Figure 3, in battery module 10, multiple sodium-ion batteries 1 can be arranged in sequence along the length direction of battery module 4. Of course, they may be arranged in any other way. Further, the multiple sodium-ion batteries 1 may be secured with fasteners. Optionally, the battery module 10 may include a housing having space to accommodate multiple sodium-ion batteries.

In some embodiments, the above-mentioned battery module 10 may further be assembled into battery packs, and the number of battery modules contained in the battery pack may be one or multiple, and the particular number can be elected by those skilled in the art according to the application and capacity of the battery pack. Of course, the battery pack may be composed of multiple sodium-ion batteries 1

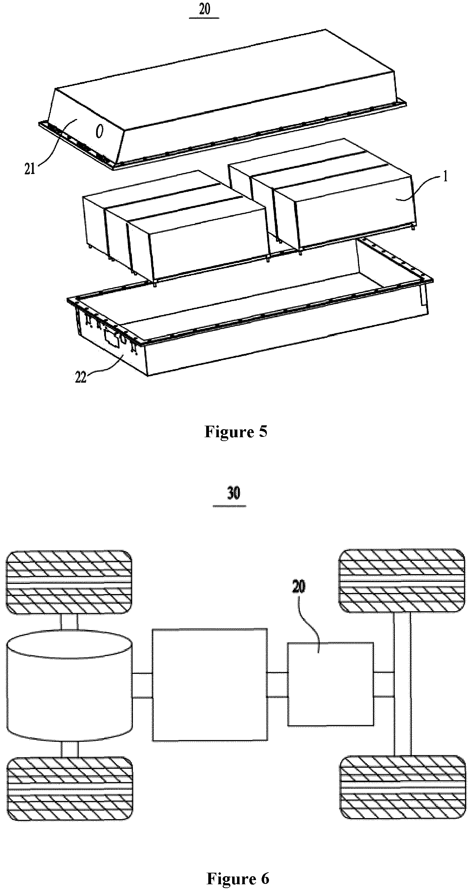

Figures 4 and 5 are schematic diagrams of battery pack 20 as an example. As shown in Figures 4 and 5, the battery pack 20 may include a battery box and multiple battery modules 10 arranged in the battery box. The battery box includes an upper box 21 and a lower box 22. The upper box 21 can cover the lower box 22 and forms a closed space for accommodating the battery module 10. Multiple battery modules 10 may be arranged in any way in the battery box.

In addition, the present application provides an electrical device, including at least one of the sodium-ion battery, the battery module, or the battery pack of the present application. The secondary battery, the battery module, and or the battery pack may be used as the electric source of the electrical device or the energy storage unit of the electrical device. The electric device may include mobile devices (such as mobile phones, laptops, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc., but is not limited thereto. The electric device may be selected as the sodium-ion battery, battery module, or battery pack according to the usage thereof.

Figure 6 is a schematic diagram of an electrical device 30 as an example. The electrical device 30 is a pure electric vehicle, hybrid electric vehicle, or plug-in hybrid electric vehicle, etc. To meet the requirements of high power and energy density of the electrical device 30 for the sodium-ion battery, the battery pack or battery module may be used. As another example, the device may be mobile phones, tablets, laptops, etc. The electrical device usually requires to be light and thin, and can adopt the sodium-ion battery as the power source.

Examples

Hereinbelow, the implementations of the present application will be described. The embodiments as described below are exemplary and are only intended to explain the present application, but should not be understood as limitations to the present application. Where the embodiment in which the specific technology or conditions are not specified, the technology or conditions may be employed according to those described in the literature in the art or the product manual. The reagents or instruments used without specifying the manufacturer are conventional products that are commercially available.

Example 1

1. Preparation of positive electrode plate

An aluminum foil having a thickness of 10 $\mu$m is used as the positive current collector.

The positive electrode active material Na2MnFe(CN)6, Super P as the conductive, and polyvinylidene fluoride (PVDF) as the binder were mixed in a weight ratio of 96 : 2.5 : 1.5 and added in an appropriate amount of N-methylpyrrolidone (NMP) and stirred via a vacuum mixer to obtain the positive electrode slurry. The slurry had a solid content of 60% by weight.

The positive electrode slurry as prepared above was applied on the aluminum foil having a thickness of 8$\mu$m, after processes such as drying, the positive electrode plate was obtained.

The porosity of the positive electrode plate was tested according to the steps of cutting the positive electrode plate to obtain 30 small discs with a diameter of 14mm; measuring the true volume of the 30 small discs using inert gases such as helium or nitrogen as the medium according to the principle of gas adsorption on AccuPyc II 1340 automatic true density tester from Micromeritics, USA; and calculating the apparent volume and the true volume of the positive electrode plate according to the area, thickness and number of the small discs, and then calculating the porosity.

2. Preparation of negative electrode plate

A copper foil having a thickness of 6$\mu$m is used as the positive current collector.

The negative active material, Super P as the conductive agent, sodium carboxymethyl cellulose (CMC) as the thickener and styrene butadiene rubber emulsion (SBR) as the binder were mixed in a weight ratio of 97:0.7: 1.8:0.5, and added into deionized water as the solvent and then were stirred via a vacuum mixer to obtain the negative electrode slurry. The slurry had a solid content of 56% by weight.

The negative electrode slurry as prepared above was applied on the copper foil having a thickness of 8$\mu$m, after processes such as drying, the negative electrode plate was obtained.

The porosity of the negative electrode plate was tested according to the steps of cutting the negative electrode plate to obtain 30 small discs with a diameter of 14mm; measuring the true volume of the 30 small discs using inert gases such as helium or nitrogen as the medium according to the principle of gas adsorption on AccuPyc II 1340 automatic true density tester from Micromeritics, USA; and calculating the apparent volume and the true volume of the negative electrode plate according to the area, thickness and number of the small discs, and then calculating the porosity.

3. Preparation of the electrolyte

In an argon atmosphere glove box with a water content of < 10ppm, the fully dried sodium salt (NaPF$_6$) was dissolved in a mixed solvent of vinyl carbonate (EC), methyl ethyl carbonate (EMC) and diethyl carbonate (DEC) in volume ratio of 20:20:60, and then the vinyl carbonate (VC) as the additive is added and mixed, to obtain the electrolyte. The concentration of sodium salt is 1 mol/L.

4. Preparation of separator

A polyethylene film (PE) having a thickness of 7$\mu$m was used as the substrate of the separator. The alumina, sodium carboxymethyl cellulose (CMC) and acrylic ester in a weight ratio of 93% : 3% : 4% were added to the deionized water and stirred via a vacuum mixer to obtain a slurry. The slurry had a solid content of 55% by weight. The obtained slurry is evenly sprayed on the two sides of the substrate with the thickness on one side being 2$\mu$m, and then the separator was obtained.

The porosity of the separator was tested according to the following steps: cutting the separator to obtain 30 small discs with a diameter of 14mm; measuring the true volume of the 30 small discs using helium or nitrogen as the medium according to the principle of gas adsorption on AccuPyc II 1340 automatic true density tester from Micromeritics, USA; and calculating the apparent volume and the true volume of the separator according to the area, thickness and number of the small discs, and then calculating the porosity.

5. Preparation of sodium-ion battery

The positive electrode plate, separator (PP/PE/PP composite film) and negative electrode plate were stacked in sequence and wrapped in aluminum-plastic film to form a stacked battery cell, then 0.3g of the above electrolytic solution is injected into the battery cell at 60°C, and the aluminum-plastic film is vacuum-pressed and sealed, after standing at 60°C for at least 6 hours, the aluminum-plastic film is cooled to 30°C, and left standing at 30°C for least 6 hours until the electrolytic solution solidified, after hot and cold pressing, formation and other processes, the sodium-ion battery was obtained.

Example 2 to Example 12

Example 2 to Example 12 were conducted according to Example 1, except that in Example 2 to Example 12, as to the porosity of the positive active material layer, the porosity of the negative active material layer and the porosity of the separator, at least one of them was different from Example 1.

Example 13 to Example 21

Example 13 to Example 21 were conducted according to Example 1, except that in Example 13 to Example 21, as to the compaction density of the positive active material layer and the compaction density of the negative active material layer, as least one of them is different from Example 1.

Example 22 to Example 26

Example 22 to Example 26 were conducted according to Example 1, except that in Example 22 to Example 26, as to the compaction density of the positive electrode active material, the specific capacity of the positive electrode active material and thickness of the positive electrode active material, and as to the compaction density of the negative electrode active material, the specific capacity of the negative electrode active material and thickness of the negative electrode active material, at least one of them is different from Example 1.

Example 27 to Example 31

Example 27 to Example 31 were conducted according to Example 1, except that in Example 27 to Example 31, the particle size of the negative active material in the negative active material layer is different from that of Example 1.

Comparative Example 1

Comparative Example 1 was conducted according to Example 1, except that in Comparative Example 1, the porosity of the positive active material layer, the porosity of the negative active material layer, and the porosity of the separator were different.
The materials and the related parameters of Example 1 to Example 31 and Compartive Example 1 are shown in Tables 1 to 3.

Table 1

| | Positive electrode plate | | Negative electrode plate | | Separator | $(\beta-\alpha)/\gamma$ | $\gamma/\alpha$ |
| | Positive active material layer | | Negative active material layer | | | | |
| | Positive active material | Porosity $\alpha$/% | Negative active material | Porosity $\beta$/% | Porosity $\gamma$/% | | |
| Example 1 | $Na_2MnFe(CN)_6$ | 30 | Hard carbon | 50.0 | 40 | 0.50 | 1.33 |
| Example 2 | $Na_2MnFe(CN)_6$ | 28 | Hard carbon | 45.0 | 33 | 0.52 | 1.18 |
| Example 3 | $Na_2MnFe(CN)_6$ | 38 | Hard carbon | 58.0 | 50 | 0.40 | 1.32 |
| Example 4 | $Na_2MnFe(CN)_6$ | 28 | Hard carbon | 58.0 | 33 | 0.91 | 1.18 |
| Example 5 | $Na_2MnFe(CN)_6$ | 20 | Hard carbon | 40.0 | 30 | 0.67 | 1.50 |

(continued)

| | Positive electrode plate | | Negative electrode plate | | Separator | $(\beta-\alpha)/\gamma$ | $\gamma/\alpha$ |
| | Positive active material layer | | Negative active material layer | | | | |
| | Positive active material | Porosity $\alpha$/% | Negative active material | Porosity $\beta$/% | Porosity $\gamma$/% | | |
|---|---|---|---|---|---|---|---|
| Example 6 | $Na_2MnFe(CN)_6$ | 40 | Hard carbon | 66.0 | 55 | 0.47 | 1.38 |
| Example 7 | $Na_2MnFe(CN)_6$ | 29 | Hard carbon | 60.5 | 33 | 0.95 | 1.14 |
| Example 8 | $Na_2MnFe(CN)_6$ | 25 | Hard carbon | 60.0 | 30 | 1.17 | 1.20 |
| Example 9 | $Na_2MnFe(CN)_6$ | 26 | Hard carbon | 41.0 | 48 | 0.31 | 1.85 |
| Example 10 | $Na_2MnFe(CN)_6$ | 21 | Hard carbon | 66.0 | 30 | 1.50 | 1.43 |
| Example 11 | $Na_2MnFe(CN)_6$ | 10 | Hard carbon | 30.0 | 20 | 1.00 | 2.00 |
| Example 12 | $Na_2MnFe(CN)_6$ | 50 | Hard carbon | 70.0 | 60 | 0.33 | 1.20 |
| Comparative Example 1 | $Na_2MnFe(CN)_6$ | 30 | Hard carbon | 70.0 | 20 | 2.00 | 0.67 |

Table 2

| | Positive electrode plate | | | Negative electrode plate | | | PD1/PD2 |
| | Positive active material layer | | | Negative active material layer | | | |
| | Compaction density PD1 | Specific capacity CAP1/ (mAh/g) | Thickness h1/$\mu$m | Compaction density PD2 | Specific capacity CAP2/ (mAh/g) | Thickness h2/$\mu$m | |
|---|---|---|---|---|---|---|---|
| Example 1 | 1.5 | 150 | 255 | 0.95 | 320 | 186 | 1.58 |
| Example 13 | 0.8 | 150 | 255 | 0.70 | 320 | 186 | 1.14 |
| Example 14 | 0.9 | 150 | 255 | 0.80 | 320 | 186 | 1.13 |
| Example 15 | 1.1 | 150 | 255 | 0.90 | 320 | 186 | 1.22 |
| Example 16 | 1.2 | 150 | 255 | 0.95 | 320 | 186 | 1.26 |
| Example 17 | 1.5 | 150 | 255 | 1.00 | 320 | 186 | 1.50 |
| Example 18 | 1.6 | 150 | 255 | 1.30 | 320 | 186 | 1.23 |

(continued)

| | Positive electrode plate | | | Negative electrode plate | | | PD1/PD2 |
| | Positive active material layer | | | Negative active material layer | | | |
| | Compaction density PD1 | Specific capacity CAP1/ (mAh/g) | Thickness h1/$\mu$m | Compaction density PD2 | Specific capacity CAP2/ (mAh/g) | Thickness h2/$\mu$m | |
|---|---|---|---|---|---|---|---|
| Example 19 | 1.7 | 150 | 255 | 1.80 | 320 | 186 | 0.94 |
| Example 20 | 2.3 | 150 | 255 | 1.00 | 320 | 186 | 2.30 |
| Example 21 | 0.8 | 150 | 255 | 1.80 | 320 | 186 | 0.44 |
| Example 22 | 1.2 | 120 | 100 | 0.95 | 320 | 50 | 1.26 |
| Example 23 | 1.2 | 130 | 100 | 0.95 | 330 | 50 | 1.26 |
| Example 24 | 1.2 | 155 | 100 | 0.95 | 355 | 50 | 1.26 |
| Example 25 | 1.2 | 110 | 100 | 0.95 | 300 | 50 | 1.26 |
| Example 26 | 1.2 | 160 | 100 | 0.95 | 360 | 50 | 1.26 |

In table 2, the thickness of the positive active material layer, h1, represents the thickness of the positive electrode active material layer when the sodium-ion battery is at 0%SOC (State Of Charge), and the thickness of the negative active material layer, h2 represents the thickness of the negative electrode active material layer when the sodium-ion battery is at 0%SOC (State Of Charge).

Table 3

| | Negative electrode active material layer | | | | $(D_V90-D_V10)/D_V50$ |
| | Dv10/$\mu$m | Dv50/$\mu$m | Dv90/$\mu$m | Negative electrode active material | |
|---|---|---|---|---|---|
| Example 1 | 2.2 | 5.3 | 9.3 | Hard carbon | 1.34 |
| Example 27 | 3.5 | 5.0 | 6.0 | Hard carbon | 0.50 |
| Example 28 | 5.0 | 10.0 | 15.0 | Hard carbon | 1.00 |
| Example 29 | 6.5 | 15.0 | 21.5 | Hard carbon | 1.00 |
| Example 30 | 0.6 | 1.0 | 1.6 | Hard carbon | 1.00 |
| Example 31 | 5.5 | 20.0 | 45.5 | Hard carbon | 2.00 |

In the above Examples, the particle size distribution, $(D_V90-D_V10)/D_V50$, was adjusted as follows: the biomass precursor wheat straw, as the raw material, was firstly heated in a high temperature furnace at 200°C for 5h under air environment for the first drying, so as to remove the remove the water of the interior of the precursor; after cooling, the precursor was crushed, and then the crushed material was kept in an oxygen-free environment and was baked at 1600°C for 5 hours, after cooling, the material was grounded for 4 hours via a ball grinder as the grinding machine, then the hard carbon having the desired particle size distribution were obtained. The particle sizes of the ball grinder beads were 50mm, 20mm, and 5mm, and the number ratio of the ball grinder beads having the above particle sizes was about 5 : 30 : 55.

**Tests**

Test of the porosity of the positive active material layer, the porosity of the negative active material layer and the porosity of the separator

The test was conducted according to the method for testing porosity as prescribed in GBAT 24586-2009 as follows: the sample cup containing the sample was placed in the true density tester and then the test system was sealed and let helium gas pass through; then the pressures of the gas in the sample chamber and the expansion chamber were detected and the true volume was calculated according to Bohr's law (PV = nRT), so as to obtain the porosity of the sample to be tested.

Test of the compaction density of the positive active material layer and the negative active material layer

At 25°C, the sodium-ion battery was discharged to 0% SOC with 0.1C current, and then the sodium-ion battery was disassembled to separate the positive electrode plate, the negative electrode plate and the separator. The disassembled plates were kept in an air blast drying oven at 60°C for 60 minutes to make the electrolytic solution on the plates evaporate, then the plates were taken out to cooling to room temperature and then were soaked in anhydrous ethanol for 30 minutes to wash off the electrolytic solution resident on the plate; and then the plates was kept in the air blast drying oven at 60°C for 60 minutes to obtain the dry plates. The dry plates were punched into a disc having the diameter of 14mm via a button plate puncher and the area of the disc was dented as S, then the weight of the disc was weighed, denoted as W1 and the weight of the current collector was weighted, denoted as W2, and by means of a micrometer, the thickness of the plate was measured, denoted as H1, and the thickness of the current collector was measured, denoted as H2.
The plates have the compact density PD = (W1-W2) / ((H1-H2)*S), in g/cm$^3$.

Tests of the thickness of active material when the sodium-ion battery is at 0%SOC

When the sodium-ion battery is at 0%SOC, the positive electrode plate or the negative electrode plate was taken as the sample, and the thickness was measured at at least 12 different positions along the thickness direction of the plate with a micrometer to get the average value; the thickness of the current collector was subtracted from the average value to obtain the thickness of the active material.

Test of Dv10, Dv50 and Dv90 of the negative active material

By means of a Laser Diffraction Particle Size Distribution Tester (Malvern Mastersizer 3000) and according to GB/T19077-2016 Particle size analysis-Laser diffraction methods, the particle size distribution was tested to obtain Dv10, Dv90, Dv50, and then the value of (DV90-DV10)/Dv50 was calculated.
For example, when Dv50 was tested, particularly, Dv50 of the negative active material was tested as follows: (1) sample pretreating: an appropriate amount of the sample to be tested was added into a clean beaker, then sodium dodecyl sulfate as the surfactant was dropped and then the deionized water as the dispersant was added, and the ultrasonic treatment was conducted (120 W/5 min) to ensure that the sample is completely dispersed in the dispersant; and (2) testing-Dv50 was tested via a LS-909 Laser Particle Size Tester (from OMEC): the sample, after being poured into the sample tower, flowed with the solution to the optical testing system, where the scattered light emitted by the particles under the irradiation of the laser beam was accepted and the energy distribution thereof was measured, so as to obtain the particle size distribution characteristic (shading: 8~12%) , then Dv50 value of the material was obtained.

Test of the numbers of cycle of the sodium-ion battery

The cyclic performance of the sodium-ion battery was evaluated at 25°C at 0.5C/0.5C.
In particular, the sodium-ion battery was charged to the charging cutoff voltage of 3.75V at a constant current and constant voltage of 0.5C rate, and after standing for 5 minutes, the secondary battery was discharged to the discharging cut-off voltage of 2 V at a constant current of 0.5 rate, and the discharging capacity was recorded, then the sodium-ion battery was left standing for 5 minutes; the above process was repeated. The number of cycle when the discharging capacity was at more than 80% of the initial capacity was recorded.

Test of 60s-pulse discharging power of the sodium-ion battery

At 25°C, the sodium-ion battery was charged to the charging cutoff voltage of 3.75V at a constant current and constant voltage of 0.5C rate, and after standing for 5 minutes, the secondary battery was discharged at a specific power until the voltage of the battery at 60s reached 2V, then the discharging was stopped and the power then was the 60s-pulse discharging power.

By testing the 60s-pulse discharging power of the sodium-ion battery, the power performance of the battery could be determined.

## Results

The effect on improving the charging and discharging performance and the energy density of the sodium-ion battery as achieved in the present application was shown in Tables 4 to 6.

Table 4

|  | Cycles of the sodium-ion battery | Power performance of the sodium-ion battery/W |
|---|---|---|
| Example 1 | 3450 | 529.82 |
| Example 2 | 3340 | 512.93 |
| Example 3 | 3360 | 516.00 |
| Example 4 | 3300 | 506.78 |
| Example 5 | 3100 | 476.07 |
| Example 6 | 3150 | 483.75 |
| Example 7 | 3055 | 469.09 |
| Example 8 | 2920 | 448.41 |
| Example 9 | 2381 | 365.70 |
| Example 10 | 2240 | 344.00 |
| Example 11 | 1588 | 243.93 |
| Example 12 | 1344 | 206.40 |
| Comparative Example 1 | 845 | 129.77 |

As shown in Table 4, in Comparative Example 1 and Example 1 to Example 12, since different porosities of the positive active material layer, negative active material layer and separator were used, the migration speed of the sodium ions could be adjusted and controlled during the charging and discharging of the sodium-ion battery. When $0 \leq (\beta-\alpha)/\gamma \leq 1.5$ and $\alpha \leq \gamma$ and especially when $0.4 \leq (\beta-\alpha)/\gamma \leq 1.5$, the migration speed of the sodium ions was high, and thus the charging and discharging power of sodium ions was high.

Table 5

|  | Cycles of the sodium-ion battery | Power performance of the sodium-ion battery AV |
|---|---|---|
| Example 1 | 3450 | 529.82 |
| Example 13 | 3725 | 572.05 |
| Example 14 | 3990 | 612.75 |
| Example 15 | 4260 | 654.21 |
| Example 16 | 4435 | 681.09 |
| Example 17 | 4300 | 660.36 |
| Example 18 | 4100 | 629.64 |
| Example 19 | 3890 | 597.39 |
| Example 20 | 3300 | 506.80 |
| Example 21 | 3380 | 519.07 |
| Example 22 | 3670 | 563.61 |

(continued)

|  | Cycles of the sodium-ion battery | Power performance of the sodium-ion battery AV |
|---|---|---|
| Example 23 | 3790 | 582.04 |
| Example 24 | 3900 | 598.93 |
| Example 25 | 3542 | 543.95 |
| Example 26 | 3345 | 513.70 |

As shown in Table 5, in Example 1 and Example 13 to Example 21, the compaction density of the positive active material layer PD1and the compaction density of the negative active material layer PD2 were adjusted and controlled, and when $0.44 \leq PD1/PD2 \leq 2.3$ and especially when $1.2 \leq PD1/PD2 \leq 1.5$, the dynamic performance of the positive active material layer and that of the negative active material layer matched. The sodium ions deintercalated out of the active material could completely intercalated into the opposite active material; accordingly, the adverse effect due to the concentration polarization could be reduced and the charging and discharging power of the sodium-ion battery could be increased.

In Example 23 to Example 26, the compaction density, specific capacity, and thickness of the active material layer were adjusted and controlled, so as to adjust and control the performance of the sodium-ion battery.

$$\frac{CAP1}{CAP2} \leq \frac{h2}{h1} \times \frac{1}{PD1/PD2} \quad \text{and} \quad \frac{CAP2}{CAP1} \leq \frac{h1}{h2} \times \frac{1.2}{PD2/PD1}$$

When , , the sodium-ion battery had good performances.

Table 6

|  | Cycles of the sodium-ion battery | Power performance of the sodium-ion battery AV |
|---|---|---|
| Example 1 | 3450 | 529.82 |
| Example 27 | 3500 | 537.50 |
| Example 28 | 3560 | 546.71 |
| Example 29 | 3690 | 566.75 |
| Example 30 | 3460 | 531.40 |
| Example 31 | 3386 | 520.00 |

As shown in Table 6, in Example 1 and Example 27 to Example 31, the particle size and the particle size distribution of the negative active material were adjusted and controlled, especially when $0.5 \leq (DV90-DV10)/DV50 \leq 2$, the migration speed sodium ions in everywhere of the negative active material could be ensured to be substantially identical and the migration path was ensured to be similar. Thus, the sodium ions could uniformly intercalate into the negative active material, thereby reducing the risk of concentration polarization.

Although the present application has been described with reference to preferred embodiments, various improvements can be made and components can be replaced with equivalents without departing from the scope of the present application. Especially, as long as there is no structural conflict, the various technical features mentioned in each embodiment can be combined in any way. The present application is not limited to the specific embodiments disclosed in the text, but includes all technical solutions falling within the scope of the claims.

**Claims**

1. A sodium-ion battery, comprising

   a positive electrode plate, comprising a positive electrode current collector and a positive electrode active material layer arranged on at least one surface of the positive electrode current collector;
   a negative electrode plate, comprising a negative electrode current collector and a negative electrode active material layer arranged on at least one surface of the negative electrode current collector; and

a separator arranged between the positive electrode plate and the negative electrode plate,
wherein the positive electrode active material layer has a porosity denoted as $\alpha$, the negative electrode active material layer has a porosity denoted as $\beta$, and the separator has a porosity denoted as $\gamma$, which satisfy $0 \leq (\beta-\alpha)/\gamma \leq 1.5$, and $\alpha \leq \gamma$.

2. The sodium-ion battery according to claim 1, wherein

$$0.4 \leq (\beta-\alpha)/\gamma \leq 1.0.$$

3. The sodium-ion battery according to claim 1 or 2, wherein

the positive electrode active material layer has the porosity denoted as $\alpha$, which satisfies $20\% \leq \alpha \leq 40\%$, and optionally, $28\% \leq \alpha \leq 38\%$; and/or
the negative electrode active material layer has the porosity denoted as $\beta$, which satisfies $40\% \leq \beta \leq 66\%$, and optionally, $45\% \leq \beta \leq 58\%$; and/or
the separator has the porosity denoted as $\gamma$, which satisfies $30\% \leq \gamma \leq 55\%$, and optionally, $33\% \leq \gamma \leq 50\%$.

4. The sodium-ion battery according to any one of claims 1 to 3, wherein

the positive electrode active material layer has a compaction density denoted as PD1 and the negative electrode active material layer has a compaction density denoted as PD2, which satisfy $0.44 \leq PD1/PD2 < 2.3$;
optionally, the positive electrode active material layer has the compaction density denoted as PD1, which satisfies $0.8 \leq PD1 \leq 1.7$, optionally, $0.9 \leq PD1 \leq 1.6$, and further optionally, $1.1 \leq PD1 \leq 1.5$; and/or
the negative electrode active material layer has the compaction density denoted as PD2, which satisfies $0.7 \leq PD2 \leq 1.8$, optionally, $0.8 \leq PD2 \leq 1.3$, and further optionally, $0.9 \leq PD2 \leq 1.0$.

5. The sodium-ion battery according to claim 4, wherein

the positive electrode active material layer includes the positive electrode active material, and the negative electrode active material layer includes the negative electrode active material, wherein the positive electrode active material has a specific capacity denoted as CAP1 and the negative electrode active material has a specific capacity denoted as CAP2, which satisfy

$$\frac{CAP1}{CAP2} \leq \frac{h2}{h1} \times \frac{1}{PD1/PD2} \text{, and } \frac{CAP2}{CAP1} \leq \frac{h1}{h2} \times \frac{1.2}{PD2/PD1},$$

in which h1 represents the thickness of the positive electrode active material layer when the sodium-ion battery is at 0%SOC, and h2 represents the thickness of the negative electrode active material layer when the sodium-ion battery is at 0%SOC;
optionally, the positive electrode active material has the specific capacity denoted as CAP1, which satisfies $110mAh/g \leq CAP1 \leq 160mAh/g$, and further optionally, $120mAh/g \leq CAP1 \leq 155mAh/g$; and/or
the negative electrode active material has the specific capacity denoted as CAP2, which satisfies $300mAh/g \leq CAP2 \leq 360mAh/g$, and further optionally, $320mAh/g \leq CAP2 \leq 355mAh/g$.

6. The sodium-ion battery according to any one of claims 1 to 5, wherein

the negative electrode active material layer includes the negative electrode active material comprising one or more of artificial graphite, natural graphite, soft carbon, hard carbon, silicon-based material, tin-based material, and sodium alloy;
optionally, the negative electrode active material includes hard carbon.

7. The sodium-ion battery according to any one of claims 1 to 6, wherein

the negative electrode active material layer includes the negative electrode active material having a particle size distribution that satisfies $0.5 \leq (DV90-DV10)/DV50 \leq 2$;
optionally, $1\ \mu m \leq Dv50 \leq 20\ \mu m$, and further optionally, $5\ \mu m \leq Dv50 \leq 15\ \mu m$.

8. The sodium-ion battery according to any one of claims 1 to 7, wherein
   the positive electrode active material layer includes a positive electrode active material having a molecular formula of $Na_2MFe(CN)_6$, in which M includes one or more of Mg, K, Ca, V, Cr, Mn, Co, Ni, Cu, and Zn, and the molar ratio of M to Fe satisfies from 0.95 to 1.05.

9. The sodium-ion battery according to any one of claims 1 to 8, wherein
   the separator has a thickness of from 5 $\mu$m to 15 $\mu$m, and optionally from 7 $\mu$m to 13 $\mu$m.

10. A battery module, including the sodium-ion battery according to any one of claims 1 to 9.

11. A battery pack, including the battery module according to claim 10.

12. An electrical device, including the sodium-ion battery according to any one of claims 1 to 9, the battery module according to claim 10, or the battery pack according to claim 11.

**Figure 1**

**Figure 2**

**Figure 3**

**Figure 4**

Figure 5

Figure 6

## INTERNATIONAL SEARCH REPORT

International application No.

**PCT/CN2022/094097**

### A. CLASSIFICATION OF SUBJECT MATTER

H01M 10/054(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 钠, 正极, 阴极, 负极, 阳极, 隔膜, 隔离膜, 隔板, 孔隙率, 孔隙度, 孔率, 压实密度, D90, DV90, D50, DV50, D10, DV10, battery, cell, Na, sodium, positive, cathode, negative, anode, separator, porosity, pressed, density

### C. DOCUMENTS CONSIDERED TO BE RELEVANT

| Category* | Citation of document, with indication, where appropriate, of the relevant passages | Relevant to claim No. |
|---|---|---|
| X | JP 2001223029 A (SHIN KOBE ELECTRIC MACH CO., LTD.) 17 August 2001 (2001-08-17) description, paragraphs 0005-0033 | 1-3, 6, 8-12 |
| Y | JP 2001223029 A (SHIN KOBE ELECTRIC MACH CO., LTD.) 17 August 2001 (2001-08-17) description, paragraphs 0005-0033 | 4, 6-12 |
| Y | CN 109088033 A (JIANGXI HUIYI NEW ENERGY CO., LTD.) 25 December 2018 (2018-12-25) description, paragraphs 0006-0053 | 4, 6-12 |
| Y | CN 109286020 A (CONTEMPORARY AMPEREX TECHNOLOGY CO., LTD.) 29 January 2019 (2019-01-29) description, paragraphs 0005-0039 | 7-12 |
| A | CN 113611827 A (CONTEMPORARY AMPEREX TECHNOLOGY CO., LTD.) 05 November 2021 (2021-11-05) entire document | 1-12 |

☐ Further documents are listed in the continuation of Box C. ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 December 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/094097**

| Patent document cited in search report | | | Publication date (day/month/year) | Patent family member(s) | | | Publication date (day/month/year) |
|---|---|---|---|---|---|---|---|
| JP | 2001223029 | A | 17 August 2001 | JP | 2001222995 | A | 17 August 2001 |
| | | | | EP | 1126538 | A1 | 22 August 2001 |
| | | | | US | 2001031391 | A1 | 18 October 2001 |
| | | | | JP | 2001325948 | A | 22 November 2001 |
| | | | | JP | 2001325949 | A | 22 November 2001 |
| | | | | JP | 2002015774 | A | 18 January 2002 |
| | | | | DE | 60105076 | D1 | 30 September 2004 |
| CN | 109088033 | A | 25 December 2018 | None | | | |
| CN | 109286020 | A | 29 January 2019 | US | 2022059864 | A1 | 24 February 2022 |
| | | | | US | 2020067125 | A1 | 27 February 2020 |
| | | | | EP | 3614462 | A1 | 26 February 2020 |
| CN | 113611827 | A | 05 November 2021 | WO | 2020156200 | A1 | 06 August 2020 |
| | | | | CN | 111525099 | A | 11 August 2020 |
| | | | | EP | 3907790 | A1 | 10 November 2021 |
| | | | | US | 2021359335 | A1 | 18 November 2021 |

Form PCT/ISA/210 (patent family annex) (January 2015)